# EUROPEAN PATENT APPLICATION

(11) **EP 4 675 543 A1**
(43) Date of publication of application: **07.01.2026**
(21) Application number: 24784667.8
(22) Date of filing: 07.03.2024
(51) Int. Cl.: G06Q 50/06, H02J 3/18, H02J 3/46

(54) **SUPPLY/DEMAND ADJUSTMENT CONTROL DEVICE, SUPPLY/DEMAND ADJUSTMENT CONTROL METHOD, INTEGRATED SUPPLY/DEMAND ADJUSTMENT METHOD, AND PROGRAM**

(30) Priority: 07.04.2023 JP 2023062798
(71) Applicant: MITSUBISHI HEAVY INDUSTRIES, LTD., Chiyoda-ku Tokyo 100-8332 (JP)
(72) Inventor: KATSUMATA, Takao, Tokyo 100-8332 (JP); KUSAKA, Satoshi, Tokyo 100-8332 (JP); KAMEGAYA, Yukikatsu, Tokyo 100-8332 (JP)
(74) Representative: Müller Schupfner & Partner Patent- und Rechtsanwaltspartnerschaft mbB (Hamburg)
(86) International application number: PCT/JP2024/008818
(87) International publication number: WO 2024/209872

(57) **Abstract**

Provided is a control device that calculates load distribution to a generator having excellent operation efficiency and determining whether to make a bid in response to a request for power supply from a power supply and demand adjustment market. A supply/demand adjustment control device includes: an acquisition unit that acquires first power requested for a power plant including a plurality of generators and second power requested from a power supply and demand adjustment market; a load distribution unit that distributes a total load that is a sum of the first power and the second power to the plurality of generators in descending order of operation efficiency, to distribute a load close to a rated load as much as possible to the generators; and a bidding determination unit that determines whether to make a bid for a request from the power supply and demand adjustment market, on the basis of whether the total load is able to be supplied.

## Description

### Technical Field

The present disclosure relates to a supply/demand adjustment control device, a supply/demand adjustment control method, an integrated supply/demand adjustment method, and a program. The present disclosure claims priority based on JP 2023-062798 filed in Japan on April 7, 2023, the contents of which are incorporated herein by reference.

### Background Art

Regarding a power plant including a plurality of generators, there has been a demand for an efficient operation of the plurality of generators based on a load requested from a central power control station or a power supply and demand adjustment market. For example, Patent Document 1 discloses an operation schedule calculation device that ranks each of power load ranges representing an output range of a generator in terms of power generation efficiency, and creates a schedule under which a generator featuring high power generation efficiency is preferentially operated according to the magnitude of a requested load.

Generally, a generator is designed to achieve the maximum efficiency at a rated power output. Thus, the generator may be operated in various power load ranges, but operates with higher economic efficiency (referred to as operation efficiency) in a power load range closer to the rated power output. Therefore, the generator is preferably operated with a load being closer to the rated load as much as possible. In view of this, according to the technique of Patent Document 1, for example, when the requested load decreases while two power generation facilities are operated under the rated load, the control is performed to adjust the output by reducing the loads on both of the two power generation facilities to operate the power generation facilities under partial loads. In this case, the operation efficiency of both of the two generators is compromised.

### Citation List

### Patent Literature

Patent Document 1: JP 2011-169234 A
Patent Document 2: JP 2014-85853 A

### Summary of Invention

### Technical Problem

When a power plant makes a bid in response to a request from the power supply and demand adjustment market, a generator is preferably operated with the load distribution performed in consideration of the operation efficiency of the entire power plant. Determination on whether to make the bid is preferably made after such load distribution is performed.

The present disclosure provides a supply/demand adjustment control device, a supply/demand adjustment control method, an integrated supply/demand adjustment method, and a program with which the problem described above can be solved.

### Solution to Problem

According to an aspect of the present disclosure, a supply/demand adjustment control device includes: an acquisition unit configured to acquire first power requested for a power plant including a plurality of generators and second power requested from a power supply and demand adjustment market; a load distribution unit configured to distribute a total load that is a sum of the first power and the second power to the plurality of generators in descending order of operation efficiency, to distribute a load close to a rated load as much as possible to the generators; and a bidding determination unit configured to determine whether to make a bid in response to a request from the power supply and demand adjustment market, based on whether the total load is providable.

According to an aspect of the present disclosure, a supply/demand adjustment method includes the steps of: acquiring first power requested for a power plant including a plurality of generators and second power requested from a power supply and demand adjustment market; distributing a total load that is a sum of the first power and the second power to the plurality of generators in descending order of operation efficiency, to distribute a load close to a rated load as much as possible to the generators; and determining whether to make a bid for a request from the power supply and demand adjustment market, based on whether the total load is able to be supplied.

According to an aspect of the present disclosure, an integrated supply/demand adjustment method includes the steps of: acquiring first power requested for a plurality of power plants and second power requested from a power supply and demand adjustment market; distributing a total load that is a sum of the first power and the second power to a plurality of generators of the plurality of power plants in descending order of operation efficiency, to distribute a load close to a rated load as much as possible to the generators; and determining whether to make a bid for a request from the power supply and demand adjustment market, based on whether the total load is able to be supplied.

According to an aspect of the present disclosure, a program causes a computer to execute the steps of: acquiring first power requested for a power plant including a plurality of generators and second power requested from a power supply and demand adjustment market; distributing a total load that is a sum of the first power and the second power to the plurality of generators in descending order of operation efficiency, to distribute a load close to a rated load as much as possible to the generators; and determining whether to make a bid for a request from the power supply and demand adjustment market, based on whether the total load is able to be supplied.

According to an aspect of the present disclosure, a program causes a computer to execute the steps of: acquiring first power requested for a plurality of power plants and second power requested from a power supply and demand adjustment market; distributing a total load that is a sum of the first power and the second power to a plurality of generators of the plurality of power plants in descending order of operation efficiency, to distribute a load close to a rated load as much as possible to the generators; and determining whether to make a bid for a request from the power supply and demand adjustment market, based on whether the total load is able to be supplied.

### Advantageous Effects of Invention

According to the supply/demand adjustment control device, the supply/demand adjustment control method, and the program described above, whether to make a bid for a power supply request from a power supply and demand adjustment market can be determined after calculating a load distribution to generators in consideration of operation efficiency.

### Brief Description of Drawings

FIG. 1 is a view illustrating an example of a power supply system according to an embodiment.
FIG. 2A is a first diagram illustrating an example of an operation efficiency database according to an embodiment.
FIG. 2B is a second diagram illustrating an example of the operation efficiency database according to an embodiment.
FIG. 3 is a diagram illustrating an example of an operation schedule according to an embodiment.
FIG. 4 is a diagram illustrating an example of a data table according to an embodiment, in which an operation environment and a result regarding a power supply request in the past are recorded.
FIG. 5A is a diagram illustrating an example of a relationship between an output of a generator and an atmospheric temperature, according to an embodiment.
FIG. 5B is a diagram illustrating an example of a relationship between an output of a generator and an atmospheric temperature, according to an embodiment.
FIG. 6 is a diagram illustrating an example of an on-site power database according to an embodiment.
FIG. 7 is a diagram illustrating an example of a bidding achievement database according to an embodiment.
FIG. 8A is a flowchart illustrating an example of bidding necessity determination processing according to an embodiment.
FIG. 8B is a diagram illustrating an overview of a method of calculating an overload output according to an embodiment.
FIG. 9A is a first diagram illustrating an example of a support screen according to an embodiment.
FIG. 9B is a second diagram illustrating an example of the support screen according to an embodiment.
FIG. 10A is a third diagram illustrating an example of the support screen according to an embodiment.
FIG. 10B is a fourth diagram illustrating an example of the support screen according to the embodiment.
FIG. 11A is a fifth diagram illustrating an example of the support screen according to an embodiment.
FIG. 11B is a sixth diagram illustrating an example of the support screen according to an embodiment.
FIG. 12 is a seventh diagram illustrating an example of the support screen according to an embodiment.
FIG. 13 is an eighth diagram illustrating an example of the support screen according to an embodiment.
FIG. 14A is a ninth diagram illustrating an example of the support screen according to an embodiment.
FIG. 14B is a tenth diagram illustrating an example of the support screen according to an embodiment.
FIG. 14C is an eleventh diagram illustrating an example of the support screen according to an embodiment.
FIG. 15A is a twelfth diagram illustrating an example of the support screen according to an embodiment.
FIG. 15B is a thirteenth diagram illustrating an example of the support screen according to an embodiment.
FIG. 15C is a fourteenth diagram illustrating an example of the support screen according to an embodiment.
FIG. 16 is a view illustrating another example of the power supply system according to an embodiment.
FIG. 17 is a diagram illustrating an example of a hardware configuration of a supply/demand adjustment control device according to an embodiment.

### Description of Embodiments

### Embodiments

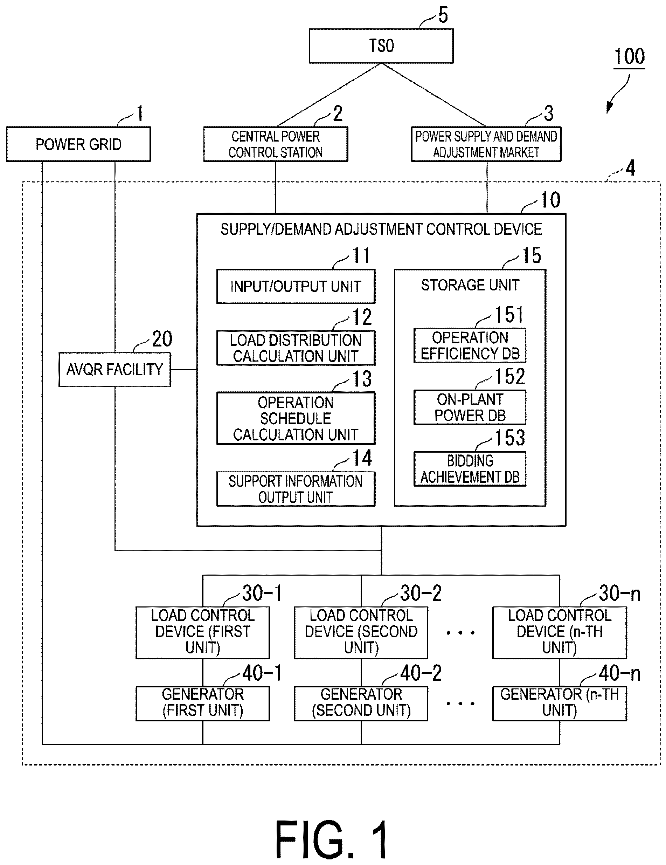

A power supply system according to the present disclosure will be described below with reference to FIG. 1 to FIG. 17.

### Configuration

FIG. 1 is a block diagram illustrating an example of a power supply system according to an embodiment.

A power supply system 100 includes a power grid 1, a central power control station 2, a power supply and demand adjustment market 3, a power plant 4, and a general distribution system operator (hereinafter, TSO 5). The power plant 4 includes a supply/demand adjustment control device 10, an AVQR facility 20, load control devices 30-1 to 30-n, and generators 40-1 to 40-n. When the power is tight, the TSO 5 deals with the shortage of power by requesting the consumer to reduce the power consumption or by purchasing power from a transmission system operator in another country such as a neighboring country. The TSO 5 determines whether to import power from a neighboring country or the like. When power is imported, the TSO 5 notifies the central power control station 2 or the power supply and demand adjustment market 3 of the power imported from a neighboring country or the like, and the central power control station 2 or the power supply and demand adjustment market 3 requests for power as a result of subtracting the power imported from the neighboring country or the like. On the contrary, when the power is to be exported upon determination to export power in response to a request for the export from another country such as a neighboring country, the TSO 5 notifies the central power control station 2 or the power supply and demand adjustment market 3 of power to be exported to the neighboring country or the like, and the central power control station 2 or the power supply and demand adjustment market 3 requests power as a result of adding the power to be exported to the neighboring country or the like. The central power control station 2 issues to the power plant 4, a command about the power to be supplied from the power plant 4 to the power grid 1. At this time, when the TSO 5 determines to import power from a neighboring country, the central power control station 2 issues to the power plant 4, a command about power as a result of subtracting the power to be imported from the originally intended power, as power to be supplied to the power grid 1. On the other hand, when the TSO 5 determines to export power to a neighboring country or the like, the central power control station 2 issues to the power plant 4, a command about power as a result of adding the power to be exported to the originally intended power, as power to be supplied to the power grid 1. In response to this command, the power plant 4 operates the generators 40-1 to 40-n so that the designated power can be supplied, and generates power. The power supply and demand adjustment market 3 presents a request for power (grid power control) according to a fluctuation in power supply and demand or the like. Here, when the TSO 5 determines to import power from a neighboring country, the power supply and demand adjustment market 3 presents a request for power (grid power control) as a result of subtracting the imported power from the power according to the fluctuation of the power supply and demand or the like. On the other hand, when the TSO 5 determines to export power to a neighboring country or the like, the power supply and demand adjustment market 3 presents a request for power (grid power control) as a result of adding the exported power to the power according to the fluctuation of the power supply and demand or the like. In response to this, the power plant 4 makes a bid for the power supply and demand adjustment market 3 upon determining that the request of the from the power supply and demand adjustment market 3 can be satisfied and that the bidding can be successful, and otherwise does not make the bid. For example, while the power supply and demand adjustment market 3 offers five types of products, that is, a primary grid power control (Frequency Containment Reserve), a secondary grid power control (1) (Synchronized Frequency Restoration Reserve), a secondary grid power control (2) (Frequency Restoration Reserve), a tertiary grid power control (1) (Replacement Reserve), and a tertiary grid power control (2) (Replacement Reserve for FIT), the determination on whether to make a bid is made for the tertiary grid power controls (1) and (2). The supply/demand adjustment control device 10 of the power plant 4 determines whether to make the bid and determines the allocation of load to the generators 40-1 to 40-n for supplying the grid power control. When the bidding succeeds, the power plant 4 operates the generators 40-1 to 40-n so as to supply power corresponding to a sum of power requested from the central power control station 2 and power requested from the power supply and demand adjustment market 3. The load control device 30-1 operates the generator 40-1 under the load allocated by the supply/demand adjustment control device 10. Similarly, the load control devices 30-2 to 30-n respectively operate the generators 40-2 to 40-n under the loads allocated to the generators 40-2 to 40-n by the supply/demand adjustment control device 10. The generators 40-1 to 40-n have a configuration in which a generator is connected to a rotor of a gas turbine or a steam turbine, for example. Hereinafter, the generator 40-1 may be described as first unit, the generator 40-2 may be described as second unit, the generator 40-3 may be described as third unit, ... and the generator 40-n may be described as n-th unit.

An Automatic Voltage & Q Regulator (AVQR) facility 20 is a facility having a bus voltage adjustment function of monitoring a fluctuation in voltage of the power grid 1 and controlling the voltage to be kept constant, an intersystem balance function of distributing the reactive-power shares among the generators 40-1 to 40-n according to generated reactive power (Q) with respect to active power (P), and a V-Q control system determination function of determining V control and Q control according to the operation states of the generators 40-1 to 40-n. For example, when a small-scale distributed power supply such as solar power generation is introduced into a power distribution system, voltage control of the power distribution system close to a consumer is essential. The power plant 4 is provided with the AVQR facility 20 assuming that the voltage of the distribution system becomes unstable due to a sudden weather change, a trouble in a sub-station, or the like. An excitation device of the AVQR facility 20 is controlled to maintain the voltage of the power grid 1 at a set value with respect to the requested power supply. The AVQR facility 20 has functions of calculating, when reactive power required for transmitting requested power is requested, advance-side reactive power distribution and delay-side reactive power distribution of first unit to n-th unit, controlling the generators 40-1 to 40-n through the load control devices 30-1 to 30-n, and supplying the required reactive power.

The supply/demand adjustment control device 10 includes one or a plurality of computers. The supply/demand adjustment control device 10 includes an input/output unit 11, a load distribution calculation unit 12, an operation schedule calculation unit 13, a support information output unit 14, and a storage unit 15.

The input/output unit 11 acquires supply power command information from the central power control station 2 and grid power control command information (EDC signal, LFC signal) from the power supply and demand adjustment market 3. When a bid is made for the power supply and demand adjustment market 3, the input/output unit 11 transmits information indicating that the bid is made for the power supply and demand adjustment market 3.

The load distribution calculation unit 12 calculates loads to be allocated to the generators 40-1 to 40-n based on power requested from the central power control station 2 and the power supply and demand adjustment market 3. The load distribution calculation unit 12 calculates the load distribution so that the generator 40-1 and the like are operated at loads close to the rated load as much as possible to improve the operation efficiency. The load distribution calculation unit 12 determines whether to make a bid for the grid power control presented by the power supply and demand adjustment market 3.

The operation schedule calculation unit 13 calculates an operation schedule of the generators 40-1 to 40-n based on the load distribution calculated by the load distribution calculation unit 12. The method of calculating the operation schedule of the generators 40-1 to 40-n is not particularly limited, and a known method can be applied (for example, Patent Document 2).

The support information output unit 14 presents, to the operator, the result of determining whether bidding would be successful by the load distribution calculation unit 12, and support information for making a final determination on whether to make the bid when it is determined that the bid would be successful.

The storage unit 15 stores various types of information such as setting information and processing data. The storage unit 15 stores an operation efficiency DB (DB is an abbreviation of database) 151, an on-site power DB 152, a bidding achievement DB 153, and the like. Hereinafter, the function of the load distribution calculation unit 12 will be described together with an example of data contents registered in a database or a data table stored in the storage unit 15.

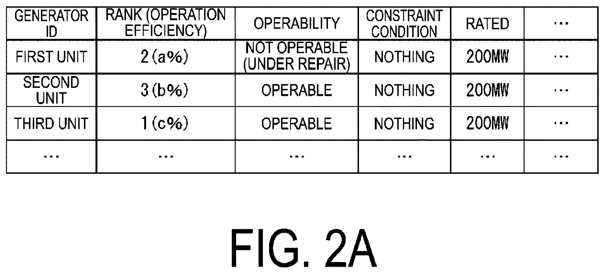

An example of the operation efficiency DB 151 is illustrated in FIG. 2A. As illustrated in the figure, the operation efficiency DB 151 has items such as "rank (operation efficiency)", "operability", "constraint condition", and "rated" for each of the generators. The name and identification information of a generator are registered in the "generator ID", and the value of the rated load is registered in the "rated". In the "rank (operation efficiency)", the rank in terms of the operation efficiency and the operation efficiency of the generators 40-1 to 40-n are set. The value in a parenthesis is the operation efficiency. The operation efficiency may be, for example, a value obtained by calculating the output load of the gas turbine with respect to the fuel input amount to the gas turbine. For example, the operation efficiency varies between generators of the same type, depending on the repair status and the like of rotor blades, stator blades, and diaphragms. The load distribution calculation unit 12 calculates the load distribution to the generators 40-1 to 40-n so that the generator featuring high operation efficiency is preferentially selected and operated. In the "operability", whether the generators 40-1 to 40-n can be operated is set. For example, the generator 40-1 (first unit) is under repair and cannot be operated. In this case, the order in terms of operation efficiency set in the operation efficiency DB 151 which is supposed to be third unit, first unit, and second unit, would actually be third unit, second unit, ... since the first unit cannot be operated. The content of the operation efficiency DB 151 is updated, for example, once a day according to the states of the generators 40-1 to 40-n. However, for example, when a trouble or the like occurs in the power generator 40-1 in the morning of a certain day, the setting content of the power generator 40-1 in the operation efficiency DB 151 may be updated in the afternoon of the day (for example, the "operability" of the first unit is updated to "not operable").

Here, it is assumed that the rated load of first unit to third unit are 200 (MW) and the contents of the operation efficiency DB 151 are as exemplarily illustrated in FIG. 2A. It is assumed that a command to supply 100 (MW) is transmitted from the central power control station 2. In this case, the load distribution calculation unit 12 determines to allocate 100 (MW) to the third unit with the highest efficiency (the partial load factor of the third unit is 50%) and not to allocate a load to the other generators 40-2 to 40-n. It is assumed that then the power supply and demand adjustment market 3 requests for a grid power control of 150 (MW) and it is determined to make a bid in response to this request. In this case, the load distribution calculation unit 12 determines to operate the third unit with the highest efficiency under the rated load corresponding to the highest efficiency and allocate the remaining load to the second unit with the second highest operation efficiency. As a result, 200 (MW) is allocated to the third unit, and 50 (MW) is allocated to the second unit (the third unit is under the rated load, and the partial load factor of the second unit is 25%).

Some power plants are operated under the equal amount control (operation of equally allocating loads to a plurality of generators). For example, when a command to supply 300 (MW) is transmitted from the central power control station 2, the second unit and the third unit are operated while each being allocated with 150 (MW). In this situation, it is assumed that the power supply and demand adjustment market 3 requests for a grid power control of 50 (MW). At this time, if it is assumed that the power requested from the power supply and demand adjustment market 3 does not have to be equally allocated even in the power plant implementing the equal amount operation, the load distribution calculation unit 12 may allocate 50 (MW) from the power supply and demand adjustment market 3 to the third unit to operate under the rated load, instead of allocating 25 (MW) to each of the second and the third power plants, and allocate 150 (MW) to the second unit. Even when the power requested from the power supply and demand adjustment market 3 is equally allocated, the load distribution calculation unit 12 distributes the load so that each generator operates with a load being close to the rated load as much as possible.

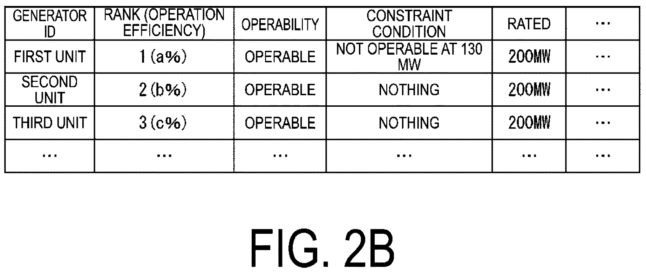

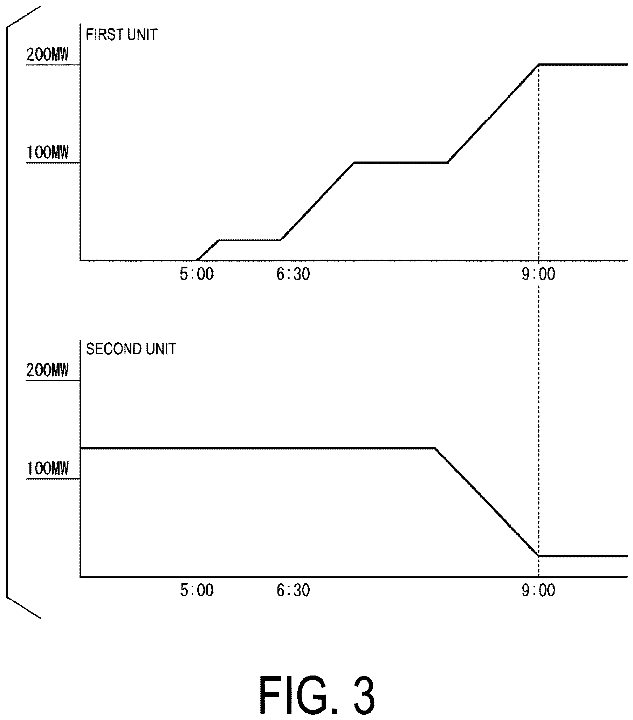

Another example of the operation efficiency DB 151 is illustrated in FIG. 2B. In the "constraint condition" of the operation efficiency DB 151, constraint conditions relating to each of the generators 40-1 to 40-n are registered. For example, in the example in FIG. 2B, the "constraint condition" of the first unit is set in such a manner that the first unit cannot be operated in the power load range of 130 (MW) for a certain reason such as the power load range being a prohibited power load range designed for gas turbine combustion burner switching. In such a case, the load distribution calculation unit 12 determines the load allocation so as to satisfy the constraint condition. For example, it is assumed that the load requested from the central power control station 2 until 9:00 AM is 130 (MW), and the total of 200 (MW), that is, 100 (MW) from the central power control station 2 and 100 (MW) from the power supply and demand adjustment market 3 is set to be supplied at 9:00 AM. In this case, the load distribution calculation unit 12 calculates the load distribution such that 130 (MW) is allocated to the second unit before 9:00 in consideration of the constraint condition of the first unit, and 200 (MW) required at 9:00 is allocated to the first unit with a high operation efficiency instead of the second unit that has been operated by then. The operation schedule calculation unit 13 calculates an operation schedule as exemplarily illustrated in FIG. 3 based on the load distribution calculated by the load distribution calculation unit 12.

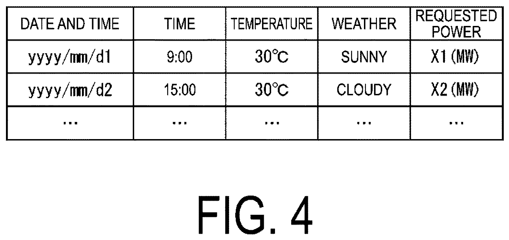

The load distribution calculation unit 12 may estimate and calculate the power demand in the time slot after 9:00 for the load distribution (whether to continue the operation with the minimum load or to stop the operation), after 9:00, for the second unit whose load is reduced instead of the first unit. For example, if the situation described in FIG. 2B and FIG. 3 corresponds to 9:00 AM of a day expected to be fine weather in summer, an additional power request may be presented from the power supply and demand adjustment market 3 due to demand for cooling or the like in a time slot after 9:00. In such a case, the load distribution calculation unit 12 may allocate the lowest load to second unit. For example, even in a sunny day of summer, when it can be determined that the present time is 9:00 PM when the power demand is less likely to rise thereafter, the load distribution calculation unit 12 may determine to stop the second unit (no load distribution). For example, the load distribution calculation unit 12 may determine whether to stop, that is, to continue or stop the operation of (whether to allocate the minimum load or not to allocate the load to) the second unit, based on a data table or the like in which information associating a time slot, an estimation value of weather, an estimation value of temperature thereafter as well as a time slot, weather, temperature, and a record of power requests from the power supply and demand adjustment market 3 in the past is registered. An example of the data table is illustrated in FIG. 4. The data table exemplarily illustrated in FIG. 4 is stored in the storage unit 15. The bidding achievement DB 153, described below, may be used for this purpose.

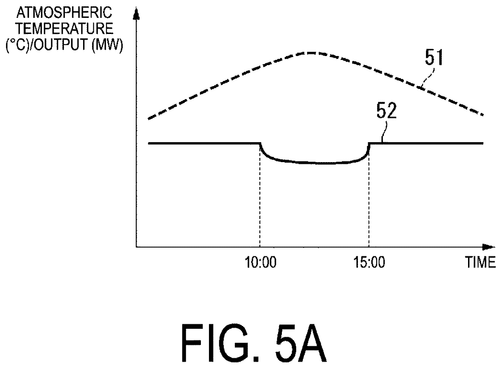

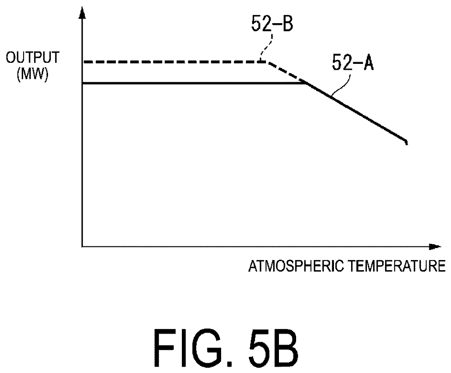

The load distribution calculation unit 12 may consider the atmospheric temperature characteristics when allocating the load to each of the generators 40-1 to 40-n. In general, with power generation by a gas turbine, the output decreases as the atmospheric temperature rises. Then, in the daytime on a day when the atmospheric temperature rises, a desired output may fail to be achieved even if the generator 40-1 and the like are operated under the rated load. FIG. 5A illustrates this state. In FIG. 5A, a graph 51 indicates the transition of the atmospheric temperature in a day, and a graph 52 indicates the transition of the output when the power generator 40-n is operated under the rated load. For example, the storage unit 15 stores a data table that defines the relationship between the atmospheric temperature and the outputs of the generators 40-1 to 40-n, as illustrated in FIG. 5B, and the load distribution calculation unit 12 estimates the outputs of the generators 40-1 and the like to which the loads are allocated, based on the data table and estimation value of the temperatures in the operation time slot (for example, this may be actually measured values of the temperatures in the same time slot on the previous day or forecast values provided by Meteorological Agency). As in the example illustrated in FIG. 5A, for example, when it is estimated that the output will decrease from 10:00 to 15:00, the load distribution calculation unit 12 may allocate a load corresponding to the estimated output shortage amount to the backup power generator 40-n. Alternatively, when the backup generator 40-n is unavailable, the load distribution calculation unit 12 may determine not to make a bid in consideration of a penalty imposed when the requested power fails to be supplied.

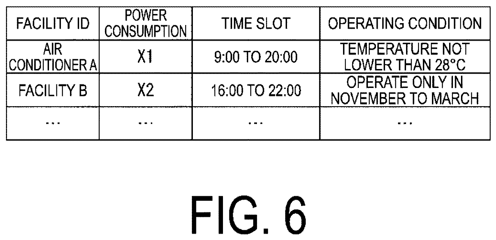

An example of the on-site power DB 152 is illustrated in FIG. 6. As illustrated, the on-site power DB 152 includes items such as "facility ID", "power consumption", "time slot", and "operating condition". The name and identification information of the facility that consumes power in the power plant 4 are registered in the "facility ID", the power consumed by the facility is registered in the "power consumption", the time slot in which the facility operates is registered in the "time slot", and the condition under which the facility operates is registered in the "operating condition". For example, an air conditioner A is set to consume X1 (kW) and operate from 9:00 to 20:00 when the temperature is 28°C or higher. A facility B consumes X2 (kW) and is set to operate from 16:00 to 22:00 in November to March. The load distribution calculation unit 12 refers to the on-site power DB 152, selects facilities that operate in a time slot in which a load is allocated, aggregates power consumption of the selected facilities, and subtracts the aggregated power consumption from the total of power generation loads of the generators 40-1 and the like to which the load is allocated. The value as a result of the subtraction is the actual power that can be supplied to the power grid 1.

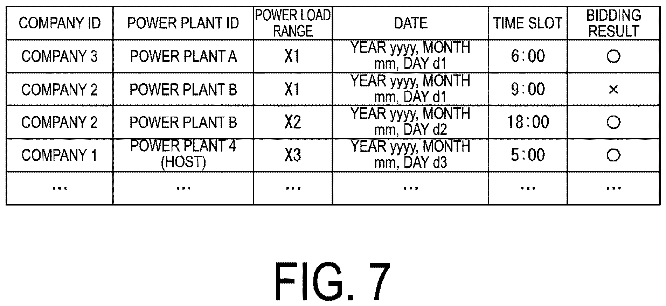

An example of the bidding achievement DB 153 is illustrated in FIG. 7. As illustrated in the figure, the bidding achievement DB 153 includes items such as "company ID", "power plant ID", "power load range", "date", "time slot", and "bidding result". The names and identification information of other power plants connected to the power grid 1 are registered in the "company ID" and the "power plant ID", the past power load range in which the power plant has made a bid in response to a request from the power supply and demand adjustment market 3 is registered in the "power load range", the date and time of the bid are respectively registered in the "date" and the "time slot", and whether the bidding was successful ("O" representing successful bidding, and X" representing failed bidding) is registered in the "bidding result". When a grid power control supply request is presented by the power supply and demand adjustment market 3, the load distribution calculation unit 12 refers to the bidding achievements of the host power plant and the other power plants recorded in the bidding achievement DB 153 and determines whether to make a bid. For example, if the bidding by the power plant A has been successful a predetermined number of times or more in the past regarding the power load range of X1 (MW), the load distribution calculation unit 12 determines that the power plant A is highly capable for this power load range, and if the power supply and demand adjustment market 3 requests for X1 (MW), the load distribution calculation unit 12 determines that the possibility of winning the power plant A is low. Thus, the bid would not be made. For example, when the season or time slot in which the bidding by the power plant A is successful for the power load range of X1 (MW) is limited (for example, in the morning or evening in summer), the load distribution calculation unit 12 may determine that the power plant A may be incapable of supplying X1 (MW) under a condition related to season or time slot different from the season or time slot in which the power plant A has a successful bidding record, and may determine that the bidding would be successful. For example, the load distribution calculation unit 12 may determine that the bidding would be successful under the condition that is the same as that when the bidding by the host power plant was successful in the past. Upon determining that the power requested to be supplied can be supplied by the operation of the generators 40-1 to 40-n and that the bidding may be successful based on the bidding achievement DB 153, the load distribution calculation unit 12 determines to make a bid for the grid power control presented by the power supply and demand adjustment market 3. When the result of bidding for the power supply and demand adjustment market 3 has been confirmed, the input/output unit 11 may add a record of the bidding achievement to the bidding achievement DB 153. Thus, the information on the bidding achievements is accumulated in the bidding achievement DB 153, and the load distribution calculation unit 12 can accurately estimate the probability of successful bidding.

### Operation

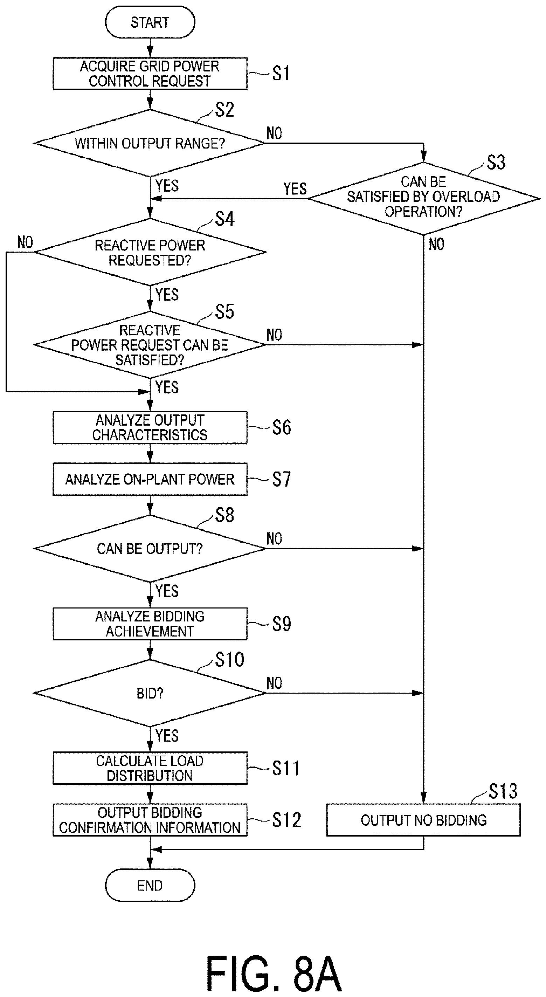

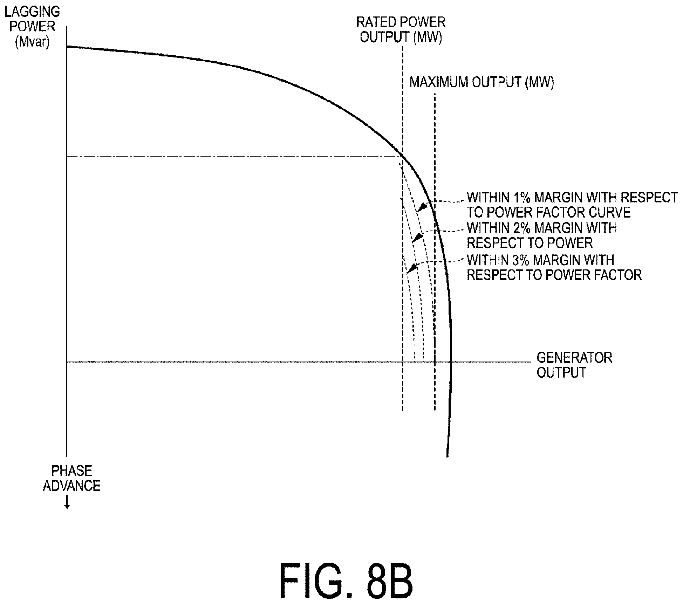

Next, description will be given on an operation of the supply/demand adjustment control device 10, using FIG. 8.

FIG. 8 is a flowchart illustrating an example of bidding necessity determination processing according to an embodiment.

As a premise, it is assumed that the allocation of the loads to the generators 40-1 to 40-n has been completed in response to the power supply request from the central power control station 2 transmitted once a day, for example. The load distribution calculation unit 12 distributes the load to the generators with high operation efficiency so that the generators can be operated with a load being close to the rated load as much as possible.

First, the input/output unit 11 acquires a grid power control generation request from the power supply and demand adjustment market 3 (step S1). Next, the load distribution calculation unit 12 determines whether the sum of the power requested from the central power control station 2 and the grid power control requested from the power supply and demand adjustment market 3 is within the output range of the power plant 4 (step S2). When the sum is within the output range (step S2; Yes), the processing proceeds to step S4.

When the sum is outside the power range (step S2; No), the load distribution calculation unit 12 determines whether the output can be achieved by an overload operation (step S3). Depending on the power plant, for example, there are cases where an operation exceeding the approved output by 5% is permitted. In such a case, under an operation condition such as a low atmospheric temperature in winter, the output may be boosted by the overload operation. FIG. 5B illustrates an example of the relationship between the atmospheric temperature and the output (maximum output) achieved with the overload operation performed, and an example of the relationship between the atmospheric temperature and the output (rated power output) during normal operation that is not the overload operation. In FIG. 5B, a graph 52-A indicates the output during the normal operation, and a graph 52-B indicates the output during the overload operation. As illustrated in the figure, at a predetermined atmospheric temperature or lower, an output exceeding the rated power output can be achieved by the overload operation. The load distribution calculation unit 12 determines whether what is requested is within the range of output that can be achieved by the overload operation. For example, the load distribution calculation unit 12 calculates how much overloading is tolerable above the rated load with a margin and without exceeding the maximum outputs based on the power-factor curves of the generators 40-1 to 40-n as illustrated in FIG. 8B. The load distribution calculation unit 12 determines whether the calculated overload can be output in consideration of the atmospheric temperature characteristic (graph 52-B) of the output during the overload operation illustrated in FIG. 5B. The details of the method of calculating the maximum value of the load that can be output exceeding the rated load with a predetermined margin based on the power factor curve are known, and therefore, will not be described here. The load distribution calculation unit 12 determines that the overload operation cannot be performed when the overload operation is not allowed, when the requested power cannot be supplied even if the overload operation is performed, or when it can be determined that the overload (for example, 5%) obtained by the calculation cannot be output due to the operation condition such as the atmospheric temperature. When the overload operation is allowed and the power requested can be supplied by the overload operation, the load distribution calculation unit 12 determines that the request can be satisfied by the overload operation. When it is determined that the request cannot be satisfied by the overload operation (step S3; No), the load distribution calculation unit 12 determines not to make a bid for the current grid power control supply request. In this case, the support information output unit 14 outputs notification information indicating that the bid should not be made (step S13). For example, the support information output unit 14 outputs a screen illustrated in FIG. 9A to a display device monitored by the operator. On this screen, a message such as "MW supply request received, but bid is not made because output range is overwhelmed" is displayed. When it is determined that the request can be satisfied by the overload operation (step S3; Yes), the processing proceeds to step S4.

In step S4, the load distribution calculation unit 12 determines whether there is a request for reactive power (step S4). It is determined whether the reactive power is included in the request from the power supply and demand adjustment market 3. When there is no request for the reactive power (step S4; No), the processing proceeds to step S6. When there is the request for reactive power (step S4; Yes), the load distribution calculation unit 12 determines whether the reactive-power request can be satisfied (step S5). The load distribution calculation unit 12 makes an inquiry to the AVQR facility 20 regarding whether the requested reactive power can be supplied. The AVQR facility 20 determines whether adjustment for supplying the requested reactive power is possible, and sends the determination result to the load distribution calculation unit 12. The AVQR facility 20 has a function of calculating the reactive power distribution for supplying the requested reactive power amount. The AVQR facility 20 calculates the reactive power distribution to the generators 40-1 to 40-n using this function, and as a result, determines that the reactive powers can be adjusted if the reactive power allocated to the generators is within a range determined by the power plant 4, and otherwise determines that the reactive powers cannot be adjusted. The load distribution calculation unit 12 determines that the reactive-power request can be satisfied when the response indicating that the adjustment is possible is obtained from the AVQR facility 20, and determines that the reactive power request cannot be satisfied when the response indicating that the adjustment is impossible is obtained. When it is determined that the reactive power request cannot be satisfied (step S5; No), the load distribution calculation unit 12 determines not to make a bid for the current grid power control supply request. In this case, the support information output unit 14 outputs notification information indicating that the bid should not be made (step S13). For example, the support information output unit 14 outputs a screen illustrated in FIG. 9A to a display device monitored by the operator. On this screen, a message such as "MW supply request received, but bid is not made because adjustment for reactive power is not possible" is displayed. When it is determined that the reactive power request can be satisfied (step S5; Yes), the processing proceeds to step S6.

Next, the load distribution calculation unit 12 analyzes the output characteristics (step S6). For example, the load distribution calculation unit 12 estimates the output of each of the generators 40-1 to 40-n in a time slot for which the power supply and demand adjustment market 3 has requested the grid power control, based on the atmospheric temperature. The load distribution calculation unit 12 refers to the operation efficiency DB 151 and acquires information such as whether or not each of the generators 40-1 to 40-n can operate, a power load range in which each of the generators 40-1 to 40-n cannot operate, and the value of the rated load.

Next, the load distribution calculation unit 12 analyzes the on-site power (step S7). The load distribution calculation unit 12 refers to the on-site power DB 152 and aggregates the power used by the facilities in the power plant 4 in a time slot for which the power supply and demand adjustment market 3 has requested the grid power control.

Next, the load distribution calculation unit 12 determines whether the load corresponding to the grid power control generation request acquired in step S1 can be output, based on the analysis results of step S6 and S7 (step S8). The load distribution calculation unit 12 calculates the total load of the generators 40-1 to 40-n that can be output in the time slot for which the power supply and demand adjustment market 3 has requested the grid power control analyzed in the step S6, and subtracts the total power used by the facilities in the power plant 4 analyzed in the step S7 from the result of the calculation. If the value as a result of the subtraction is equal to or greater than the grid power control requested by the power supply and demand adjustment market 3, the load distribution calculation unit 12 determines that the output is possible, and otherwise determines that the output is impossible. In addition, when it is possible to request for suppression of output by the facilities in the power plant 4 in order to make a bid for the power supply and demand adjustment market 3, an output suppression function may be provided. In this case, the value of the power consumption of the on-site power DB 152 is rewritten to the value after the suppression.

When it is determined that the load corresponding to the grid power control generation request from the power supply and demand adjustment market 3 cannot be output (step S8; No), the load distribution calculation unit 12 determines not to make a bid for the current grid power control supply request. In this case, the support information output unit 14 outputs notification information indicating that the bid should not be made (step S13). For example, the support information output unit 14 outputs a screen illustrated in FIG. 9A to a display device monitored by the operator. On this screen, a message such as "MW supply request received, but bid is not made because output is determined to be impossible" is displayed. When it is determined that the reactive power request can be satisfied (step S8; Yes), the processing proceeds to step S9.

Next, the load distribution calculation unit 12 analyzes the bidding achievements of the host and the other plant (step S9). For example, the load distribution calculation unit 12 determines whether the bidding would be successful based on the time slot for which the power supply and demand adjustment market 3 has requested the grid power control and the value of the grid power control (power load range) based on the bidding achievement DB 153. For example, if the current bidding conditions match or can be regarded as matching the season, time slot, and power load range when the bidding was successful in the past, the load distribution calculation unit 12 determines that the bid can be made. Alternatively, the load distribution calculation unit 12 may determine that the bid can be made if two of the season, the time slot, and the power load range match or can be regarded as matching, or if the power load range matches without the season and the time slot matching. When it is determined that the bid can be made (step S10; Yes), the processing proceeds to step S11.

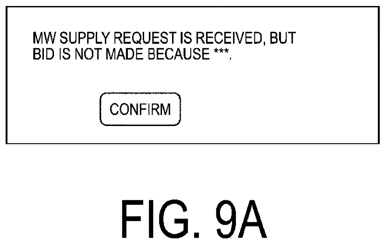

When it is determined that the bid can be made (step S10; No), the load distribution calculation unit 12 determines not to make the bid for the current grid power control supply request. In this case, the support information output unit 14 outputs notification information indicating that the bid should not be made (step S13). For example, the support information output unit 14 outputs a screen illustrated in FIG. 9A to a display device monitored by the operator. On this screen, a message such as "MW supply request received, but bid is not made because bidding is less likely to be successful" is displayed. The screen exemplarily illustrated in FIG. 9A may be settable between displayed and not displayed. For example, upon feeling that the screen is in the way of operation monitoring, the operator sets the screen to be not displayed. While the screen is displayed when it is determined No in steps S3, S5, S8, and S10, the screen may be switched between display and the non-display depending on the situation. For example, the screen in FIG. 9A may be displayed only when the result of step S10 is No, and may not be displayed when the result of the step S3, S5, or S8 is No.

While the load distribution calculation unit 12 makes the determination in step S10, the load distribution calculation unit 12 may refer to the bidding achievement DB 153, analyze the possibility of successful bidding, and present the result to the operator. Then, the operator may determine whether to make the bid. For example, based on the result of the analysis by the load distribution calculation unit 12, the support information output unit 14 may output a screen with a message such as "This power load range has been successfully bid by another power plant A 10 times in the past, our bidding was never successful. Still, do you want to make bid this time?" as well as "Yes" and "No" selectable. In this case, when the operator selects "Yes", the processing proceeds to step S11.

Next, the load distribution calculation unit 12 calculates the load distribution (step S11). The load distribution calculation unit 12 refers to the operation efficiency DB 151, acquires information such as the rated load, operability, and operation efficiency of each of the power generator 40-1 and the like, and calculates load distribution so that as many power generators 40-1 and the like as possible are operated under loads close to the rated load corresponding to the maximum efficiency, for a requested load as a sum of power requested from the central power control station 2 and grid power control requested from the power supply and demand adjustment market 3. Specifically, in the adjustment of the load distribution, a unit with a high partial load factor is preferentially set to perform the rated operation, and then the partial load operation corresponding to the remaining load amount output is allocated. The load distribution calculation unit 12 performs load distribution so that the generator 40-1 or the like having high operation efficiency is preferentially set to be under the rated load. For example, it is assumed that all of the first to third units under the rated load of 200 (MW) are currently under partial load operation at 100 (MW), the first unit has the highest operation efficiency, and the second unit has the second highest operation efficiency. In this situation, when 200 (MW) newly requested from the power supply and demand adjustment market 3 is added and distributed, the load distribution calculation unit 12 sums the original load 300 (MW) and the newly requested load 200 (MW), allocates 200 (MW) of the total 500 (MW) to the first unit with the highest operation efficiency to make the first unit be under the rated load, allocates 200 (MW) to the second unit with the second highest operation efficiency to make the second machine be under the rated load, and allocates the remaining 100 (MW) to the third unit. By distributing the total load in order from the generator with the highest operation efficiency among the plurality of generators in this manner, the load allocated to the generator becomes as close as possible to the rated load, whereby the operation efficiency of each generator can be maximized, and as a result, the operation efficiency of the entire power plant 4 can be maximized. The load distribution calculation unit 12 records the load distribution at the time of successful bidding in the storage unit 15.

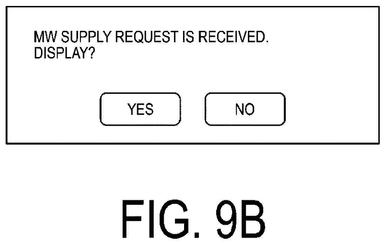

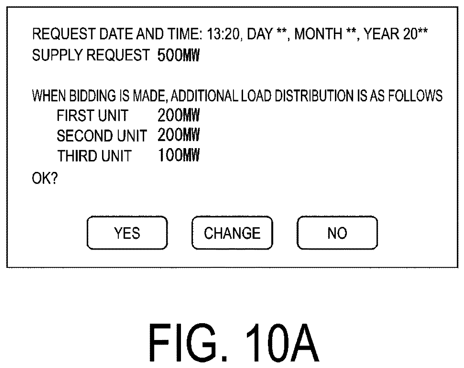

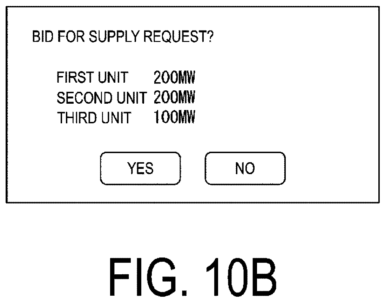

In the next step S12, the support information output unit 14 outputs bidding confirmation information (step S12), and makes a final determination on whether to make the bid based on the decision of the operator. When the bidding is determined not to be successful, the support information output unit 14 outputs the bidding confirmation information (step S12). First, the support information output unit 14 displays a screen exemplarily illustrated FIG. 9B. When "No" is selected on this screen, the bid is not made. When "Yes" is selected, the support information output unit 14 displays a screen exemplarily illustrated in FIG. 10A. The load distribution calculated in step S11 is displayed in FIG. 10A. When "Yes" is selected on the screen in FIG. 10A, the support information output unit 14 displays a confirmation screen exemplarily illustrated in FIG. 10B. When "No" is selected on the confirmation screen, the bid is not made. When "Yes" is selected, the bid is made. The input/output unit 11 transmits information indicating that the bid is made to the power supply and demand adjustment market 3.

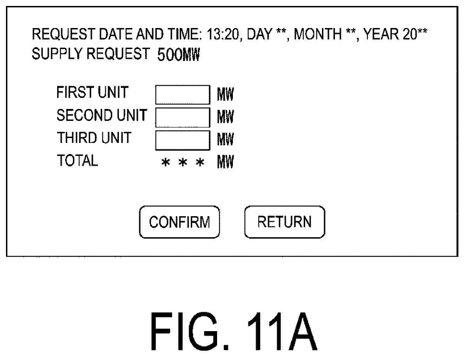

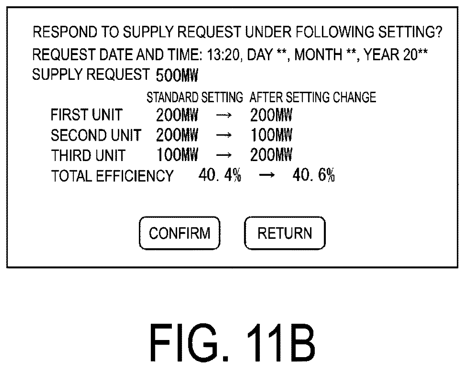

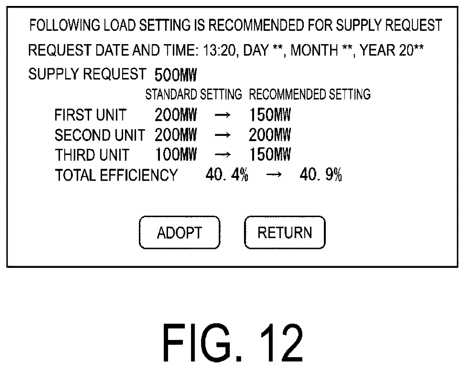

When "change" is selected on the screen in FIG. 10A, the support information output unit 14 displays a change screen exemplarily illustrated in FIG. 11A or FIG. 12. The change screen in FIG. 11A is described. On the change screen in FIG. 11A, the operator can set the load to be allocated to each unit. The operator sets, for example, 200 (MW) for the first unit, 100 (MW) for the second unit, and 200 (MW) for the third unit, and selects "confirm". When "confirm" is selected on the screen in FIG. 11A, the support information output unit 14 displays a confirmation screen exemplarily illustrated in FIG. 11B. When "return" is selected on the screen in FIG. 11A, the support information output unit 14 displays the confirmation screen in FIG. 10B.

On the confirmation screen exemplarily illustrated in FIG. 11B, the load distribution before the change and the load distribution set by the operator are displayed, and the average value of the operation efficiencies of the first to the third units is displayed as the total efficiency. When "confirm" is selected in the screen in FIG. 11B, the bid is made. When "return" is selected, the confirmation screen in FIG. 11A is displayed.

Next, the confirmation screen in FIG. 12 will be described. The change screen in FIG. 12 displays the load distribution ("standard setting" in FIG. 12) calculated in step S11 and the load distribution ("recommended setting" in FIG. 12) recalculated by the load distribution calculation unit 12. The recommended setting is a load distribution calculated by the load distribution calculation unit 12 by referring to the content of the latest operation efficiency DB 151 again after the operator selects "change" on the screen in FIG. 10A. The operation efficiency DB 151 is updated once a day, but if a situation arises in which the first unit cannot be operated under the rated load in the morning of the day, for example, such a content is not immediately reflected on the operation efficiency DB 151. In such a case, when the operator confirms that 200 (MW) is allocated to the first unit on the screen of FIG. 10A, the operator sets, for example, the first unit not operable under the rated load (200 (MW)) as the "constraint condition" of the operation efficiency DB 151, and updates the operation efficiency DB 151. Thereafter, "change" is selected on the screen in FIG. 10A. Then, for example, the load distribution illustrated as an example of the "recommended setting" in FIG. 12 is calculated, and the confirmation screen illustrated in FIG. 12 as an example is displayed. When "adopt" is selected on the screen in FIG. 12, the bid is made. When "return" is selected, the confirmation screen in FIG. 10A is displayed.

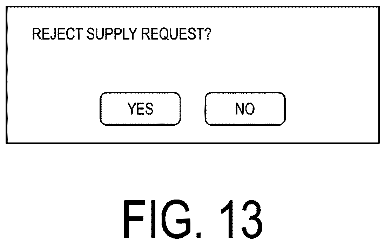

When "No" is selected on the screen in FIG. 10A, the support information output unit 14 displays a confirmation screen illustrated as an example in FIG. 13. On the screen in FIG. 13, a confirmation for rejecting the supply request (not to make a bid) is requested. When "Yes" is selected on the screen in FIG. 13, the bid is not made. When "No" is selected on the screen in FIG. 13, the support information output unit 14 displays the confirmation screen exemplarily illustrated in FIG. 10A.

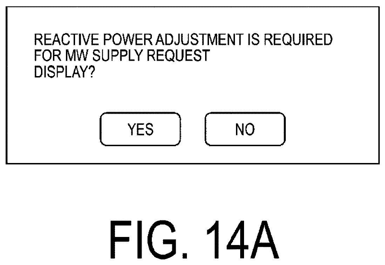

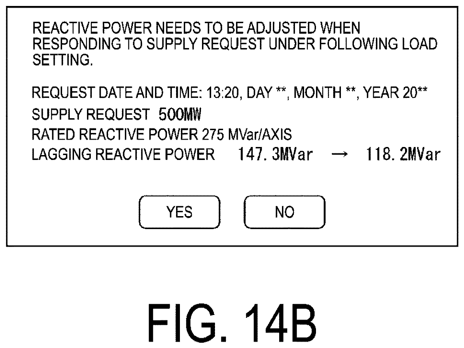

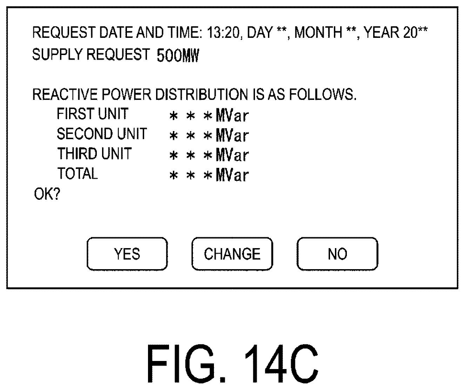

When it is determined Yes in step S4, the support information output unit 14 displays a screen exemplarily illustrated in FIG. 14A. When "No" is selected on the screen in FIG. 14A, the bid is not made. When "Yes" is selected on the screen in FIG. 14A, the support information output unit 14 displays a screen exemplarily illustrated in FIG. 14B. Rated reactive power and rugging reactive power in FIG. 14B are calculated by the AVQR facility 20. This calculation itself is known and is executed in an AVQR facility of a general power plant, and therefore, a calculation method will not be described. When "No" is selected on the screen in FIG. 14B, the bid is not made. For example, if a change in the reactive power is not allowed, the operator selects "No". When "Yes" is selected on the screen in FIG. 14B, the support information output unit 14 displays a screen exemplarily illustrated in FIG. 14C. On the screen in FIG. 14C, the distribution of the reactive powers to the first to the third units is displayed. This distribution is calculated by the AVQR facility 20 using a known calculation method. When "No" is selected on the screen in FIG. 14C, the bid is not made. When "Yes" is selected on the screen in FIG. 14C, the bid is made. Alternatively, when power other than the reactive power is requested, the screen exemplarily illustrated in FIG. 9B is displayed, and the processing described with reference to FIG. 9B to FIG. 13 is executed. When "change" is selected on the screen in FIG. 14C, a screen is displayed on which the operator can set the reactive power to be distributed to each of the units, and when "Yes" is selected after the reactive power distribution is set on this screen, the bid is made. In general, it is rare to adjust the reactive power for the sake of making a bid for a request from the power supply and demand adjustment market 3, but still a consideration may be made regarding whether to make the bid in a case such as, for example, that when the capacitor function does not work due to a trouble in a substation. According to the present embodiment, whether the reactive power adjustment is viable and the allocation of the reactive power to each of the units are automatically calculated, and the result is presented, so that the operator can determine whether to make a bid for the request for the reactive power only by checking the result.

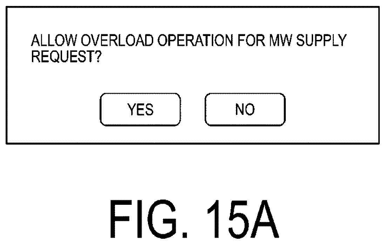

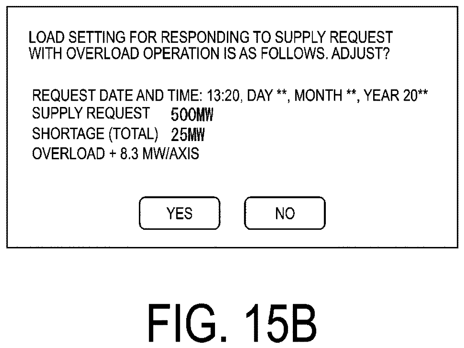

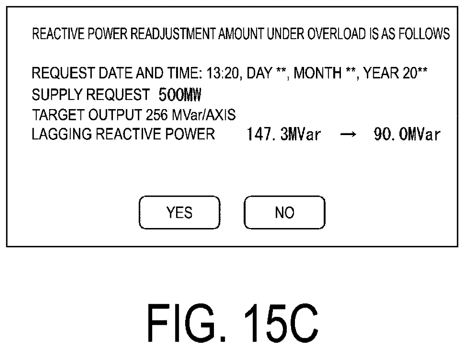

When it is determined Yes in step S3, the support information output unit 14 displays a screen exemplarily illustrated in FIG. 15A. When "No" is selected on the screen in FIG. 15A, the bid is not made. When "Yes" is selected on the screen in FIG. 15A, the support information output unit 14 displays a screen exemplarily illustrated in FIG. 15B. When "No" is selected on the screen in FIG. 15B, the bid is not made. For example, even if it is calculated that the overload output is possible as a result of the calculation in the step S3, the operator selects "No" when the requested load is estimated to be not generable, taking into account the output decrease due to expected atmospheric temperature rise. When "Yes" is selected on the screen in FIG. 15B, the support information output unit 14 displays a screen exemplarily illustrated in FIG. 15C. The target output and the rugging reactive power on the screen in FIG. 15C are calculated by the AVQR facility 20 using a known calculation method. When "No" is selected on the screen in FIG. 15C, the bid is not made. When "Yes" is selected on the screen in FIG. 15C, the support information output unit 14 displays a screen exemplarily illustrated in FIG. 14C. The processing thereafter is as described with reference to FIG. 14C. According to the present embodiment, whether the overload operation is possible and the allocation to each of the units are automatically calculated and the result is presented, so that the operator can determine whether to perform the overload operation and make a bid by simply checking the result.

### Effects

As described above, according to the present embodiment, in response to a grid power control supply request from the power supply and demand adjustment market 3, the load distribution to each of the generators 40-1 to 40-n to optimize the operation efficiency of the entire power plant 4 is calculated, and it is possible to determine whether to make the bid based on the load distribution result. Further, when whether to make a bid is determined, the power that can be supplied is calculated in consideration of the operability of each generator, the constraint condition on operation, the atmospheric temperature characteristics, whether overload operation and reactive power adjustment are possible, and the power consumed in the power plant 4, and whether to make a bid can be determined from the calculation result. It is possible to determine whether to make a bid in accordance with a possibility of the bidding being successful, based on the past bidding achievements.

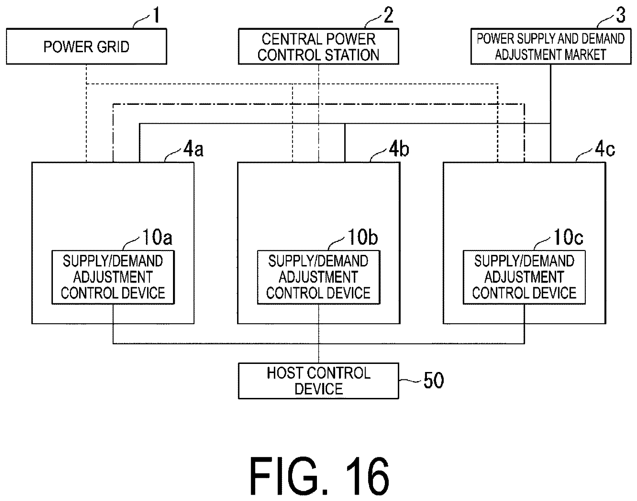

In FIG. 1, determination on the load distribution and on whether to make a bid for the supply request from the power supply and demand adjustment market 3 is made in one power plant. Alternatively, as schematically illustrated in FIG. 16, a host control device 50 having the same function as the supply/demand adjustment control devices 10a to 10c may be provided at a higher level of the plurality of power plants 4a to 4c, and may perform control in such a manner that, for one grid power control request from the power supply and demand adjustment market 3, the determination on whether to make a bit is made and requested grid power control is supplied by the plurality of power plants 4a to 4c, with the plurality of power plants 4a to 4c cooperating with each other to optimize the load distribution to the generators of each of the power plants. For example, the host control device 50 distributes the total load that is a sum of the power supply request from the central power control station 2 (the power supply request from which the power supplied from other countries through the TSO 5 is subtracted or the power supply request to which the power supplied to other countries through the TSO 5 by is added) and the grid power control generation request from the power supply and demand adjustment market 3 (the grid power control generation request from which the power supplied from other countries through the TSO 5 is subtracted the grid power control generation request to which the power supplied to other countries through the TSO 5 is added) to the plurality of generators in the power plants 4a to 4c in descending order of the operation efficiency, so that a load close to the rated load as much as possible is distributed to each of the generators.

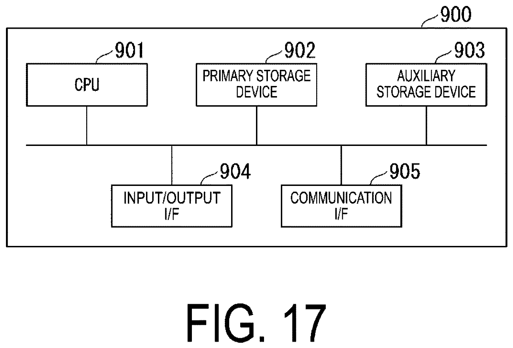

FIG. 17 is a diagram illustrating an example of a hardware configuration of a supply/demand adjustment control device.

A computer 900 includes a CPU 901, a primary storage device 902, an auxiliary storage device 903, an input/output interface 904, and a communication interface 905.

The above-described supply/demand adjustment control devices 10 and 10a to 10c and the host control device 50 are implemented in the computer 900. Each of the above-described functions is stored in the auxiliary storage device 903 in a format of a program. The CPU 901 reads the program from the auxiliary storage device 903, loads the program into the primary storage device 902, and executes the above-mentioned processing in accordance with the program. The CPU 901 secures a storage area in the primary storage device 902 in accordance with the program. The CPU 901 secures a storage area for storing data under processing in the auxiliary storage device 903 in accordance with the program. The CPU 901 loads the program onto the primary storage device 902 using information input from the input/output interface 904 and the communication interface 905, executes the above-described processing according to the program, and provides an output.

A program for implementing the whole or part of the functions of the supply/demand adjustment control device 10 and 10a to 10c and the host control device 50 may be recorded in a computer readable recording medium, and a computer system may be caused to read and execute the program recorded in the recording medium to execute the processing of the respective functional units. The "computer system" here includes an operating system (OS) and hardware such as peripheral equipment. When a WWW system is used, the "computer system" also includes a home page provision environment (or a display environment). The "computer readable recording medium" refers to a portable medium such as a CD, a DVD, or a USB, or a storage device such as a hard disk built in the computer system. When the program is distributed to the computer 900 through a communication line, the computer 900 having received the distribution may load the program into the primary storage device 902 to execute the above-described processing. The above-described program may implement part of the above-described functions and may further implement the above-described functions in combination with a program already recorded in the computer system.

Some embodiments according to the present disclosure have been described as above, these embodiments are presented as mere examples, and are not intended to limit the scope of the invention. These embodiments may be implemented in various other forms, and various omissions, substitutions, and changes can be made without departing from the gist of the invention. These embodiments and modifications thereof are included in the scope and gist of the invention and are also included in the scope of the invention described in the claims and the equivalents thereof.

### Supplementary Notes

The supply/demand adjustment control device, the supply/demand adjustment control method, and the program described in each embodiment are grasped as follows, for example.
(1) A supply/demand adjustment control device according to a first aspect includes: an acquisition unit configured to acquire first power requested for a power plant including a plurality of generators and second power requested from a power supply and demand adjustment market; a load distribution unit configured to distribute a total load that is a sum of the first power and the second power to the plurality of generators in descending order of operation efficiency, to distribute a load close to a rated load as much as possible to the generators; and a bidding determination unit configured to determine whether to make a bid for a request from the power supply and demand adjustment market, based on whether the total load is able to be supplied.
   With this configuration, whether to make a bid can be determined with the load distribution to the generators calculated in consideration of the operation efficiency, in response to the request for the power supply from the power supply and demand adjustment market.
(2) A supply/demand adjustment control device according to a second aspect is the supply/demand adjustment control device according to (1), wherein the bidding determination unit determines whether to make a bid for the request based on whether reactive power included in the request is able to be supplied.
   With this configuration, the requested for the reactive power can also be satisfied.
(3) A supply/demand adjustment control device according to a third aspect is the supply/demand adjustment control device according to (1) or (2), wherein the bidding determination unit determines whether the total load is able to be supplied, by implementing an overload operation of the generators, when the total load exceeds an upper limit of a load capable of being output by the power plant.
   With this configuration, whether to respond to the request from the power supply and demand adjustment market 3 by implementing the overload operation can be determined.
(4) A supply/demand adjustment control device according to a fourth aspect is the supply/demand adjustment control device according to any one of (1) to (3), wherein the bidding determination unit determines whether the total load is able to be supplied, based on an atmospheric temperature characteristic of the generators.
   With this configuration, a situation where the desired load fails to be supplied due to a rise in atmospheric temperature can be avoided.
(5) A supply/demand adjustment control device according to a fifth aspect is the supply/demand adjustment control device according to any one of (1) to (4), wherein the bidding determination unit subtracts power required in the power plant from a total power output by the plurality of generators to determine whether the total load is able to be supplied.
   With this configuration, whether to make a bid can be determined in consideration of power consumed in the power plant.
(6) A supply/demand adjustment control device according to a sixth aspect is the supply/demand adjustment control device according to any one of (1) to (5), wherein the bidding determination unit determines whether to make a bid for the request, based on a bidding achievement for a past request from the power supply and demand adjustment market.
   With this configuration, bidding that is unlikely to be successful can be prevented from being made.
(7) A supply/demand adjustment control device according to a seventh aspect is the supply/demand adjustment control device according to (6), wherein the bidding determination unit determines not to make a bid for the request when there is a record of successful bidding by another power plant for a power load range included in the request, and determines to make a bid for the request when there is no record of the successful bidding by the other plant, based on a past bidding achievement for a request from the power supply and demand adjustment market.
   The bidding unlikely to be successful can be prevented from being made for a power load range the bidding for which by the other power plant is likely to be successful.
(8) A supply/demand adjustment control device according to an eighth aspect is the supply/demand adjustment control device according to any one of (1) to (7), further including a support information output unit configured to, when the bidding determination unit determines to make a bid for the request, output information for requesting for final confirmation regarding whether to make the bid.
   With this configuration, the operator can make the final decision regarding the bidding.
(9) A supply/demand adjustment control device according to a ninth aspect is the supply/demand adjustment control device according to (8), wherein the support information output unit outputs a user interface (FIG. 11A) enabling the load distributed by the load distribution unit to be changed.
   With this configuration, the final load distribution can be set by the operator.
(10) A supply/demand adjustment control device according to a tenth aspect is the supply/demand adjustment control device according to any one of (1) to (9), wherein when another country supplies power, the acquisition unit acquires, as the first power, power obtained by subtracting third power, defined as power supplied from the other country, from power requested to be supplied by the power plant.
   With this configuration, import of power from the other country such as a neighboring country is enabled when power is tight.
(11) A supply/demand adjustment control device according to an eleventh aspect is the supply/demand adjustment control device according to any one of (1) to (10), wherein when power is supplied to another country, the acquisition unit acquires, as the first power, power obtained by adding fourth power, defined as the power supplied to the other country, to power requested to be supplied by the power plant.
   With this configuration, export of power to the other country such as a neighboring country is enabled when power is tight in the other country for example.
(12) A supply/demand adjustment control device according to a twelfth aspect is the supply/demand adjustment control device according to any one of (1) to (11), wherein when another country supplies power, the acquisition unit acquires, as the second power, power obtained by subtracting third power, defined as the power supplied from the other country, from power requested from the power supply and demand adjustment market.
   With this configuration, import of power from the other country such as a neighboring country is enabled when power is tight.
(13) A supply/demand adjustment control device according to a thirteenth aspect is the supply/demand adjustment control device according to any one of (1) to (12), wherein when power is supplied to another country, the acquisition unit acquires, as the second power, power obtained by adding fourth power, defined as the power supplied to the other country, to power requested from the power supply and demand adjustment market.
   With this configuration, export of power to the other country such as a neighboring country is enabled when power is tight in the other country.
(14) A supply/demand adjustment method according to a fourteenth aspect includes the steps of: acquiring first power requested for a power plant including a plurality of generators and second power requested from a power supply and demand adjustment market; distributing a total load that is a sum of the first power and the second power to the plurality of generators in descending order of operation efficiency, to distribute a load close to a rated load as much as possible to the generators; and determining whether to make a bid for a request from the power supply and demand adjustment market, based on whether the total load is able to be supplied.
(15) An integrated supply/demand adjustment method according to a fifteenth aspect includes the steps of: acquiring first power requested for a plurality of power plants and second power requested from a power supply and demand adjustment market; distributing a total load that is a sum of the first power and the second power to a plurality of generators of the plurality of power plants in descending order of operation efficiency, to distribute a load close to a rated load as much as possible to the generators; and determining whether to make a bid for a request from the power supply and demand adjustment market, based on whether the total load is able to be supplied.
(16) A program according to a sixteenth aspect causes a computer to execute the steps of: acquiring first power requested for a power plant including a plurality of generators and second power requested from a power supply and demand adjustment market; distributing a total load that is a sum of the first power and the second power to the plurality of generators in descending order of operation efficiency, to distribute a load close to a rated load as much as possible to the generators; and determining whether to make a bid for a request from the power supply and demand adjustment market, based on whether the total load is able to be supplied.
(17) A program according to a seventeenth aspect causes a computer to execute the steps of: acquiring first power requested for a plurality of power plants and second power requested from a power supply and demand adjustment market; distributing a total load that is a sum of the first power and the second power to a plurality of generators of the plurality of power plants in descending order of operation efficiency, to distribute a load close to a rated load as much as possible to the generators; and determining whether to make a bid for a request from the power supply and demand adjustment market, based on whether the total load is able to be supplied.

### Industrial Applicability

According to the supply/demand adjustment control device, the supply/demand adjustment control method, and the program described above, whether to make a bid for a power supply request from a power supply and demand adjustment market can be determined after calculating a load distribution to generators in consideration of operation efficiency.

### Reference Signs List

100 ... Power supply system
1 ... Power grid
2 ... Central power control station
3 ... Power supply and demand adjustment market
4, 4a, 4b, 4c ... Power plant
10, 10a, 10b, 10c ... Supply/demand adjustment control device
11 ... Input/output unit
12 ... Load distribution calculation unit
13 ... Operation schedule calculation unit
14 ... Support information output unit
15 ... Storage unit
151 ... Operation efficiency DB
152 ... On-site power DB
153 ... Bidding achievement DB
20 ... AVQR facility
30-1 to 30-n ... Load control device
40-1 to 40-n ... Generator
50 ... Host control device
900 ... Computer
901 ... CPU
902 ... Primary storage device
903 ... Auxiliary storage device
904 ... Input/output interface
905 ... Communication interface

## Claims

1. A supply/demand adjustment control device, comprising:
an acquisition unit configured to acquire first power requested for a power plant including a plurality of generators, and second power requested from a power supply and demand adjustment market;
a load distribution unit configured to distribute a total load that is a sum of the first power and the second power to the plurality of generators in descending order of operation efficiency, to distribute a load close to a rated load as much as possible to the generators; and
a bidding determination unit configured to determine whether to make a bid for a request from the power supply and demand adjustment market, based on whether the total load is able to be supplied.

2. The supply/demand adjustment control device according to claim 1, wherein the bidding determination unit determines whether to make a bid for the request, based on whether reactive power included in the request is able to be supplied.

3. The supply/demand adjustment control device according to claim 1 or 2, wherein the bidding determination unit determines whether the total load is able to be supplied, by implementing an overload operation of the plurality of generators, when the total load exceeds an upper limit of a load capable of being output by the power plant.

4. The supply/demand adjustment control device according to any one of claim 1 or 2, wherein the bidding determination unit determines whether the total load is able to be supplied, based on an atmospheric temperature characteristic of the plurality of generators.

5. The supply/demand adjustment control device according to claim 1 or 2, wherein the bidding determination unit subtracts power required in the power plant from a total power output by the plurality of generators to determine whether the total load is able to be supplied.

6. The supply/demand adjustment control device according to claim 1 or 2, wherein the bidding determination unit determines whether to make a bid for the request, based on a bidding achievement for a past request from the power supply and demand adjustment market.

7. The supply/demand adjustment control device according to claim 6, wherein the bidding determination unit determines not to make a bid for the request when there is a record of successful bidding by another power plant for a power load range included in the request, and determines to make a bid for the request when there is no record of the successful bidding by the other power plant, based on a past bidding achievement for a request from the power supply and demand adjustment market.

8. The supply/demand adjustment control device according to claim 1 or 2, further comprising a support information output unit configured to, when the bidding determination unit determines to make a bid for the request, output information for requesting for final confirmation regarding whether to make the bid.

9. The supply/demand adjustment control device according to claim 8, wherein the support information output unit outputs a user interface enabling the load distributed by the load distribution unit to be changed.

10. The supply/demand adjustment control device according to claim 1 or 2, wherein when another country supplies power, the acquisition unit acquires, as the first power, power obtained by subtracting third power, defined as power supplied from the other country, from power requested to be supplied by the power plant.

11. The supply/demand adjustment control device according to claim 1 or 2, wherein when another country supplies power, the acquisition unit acquires, as the second power, power obtained by subtracting third power, defined as the power supplied from the other country, from power requested from the power supply and demand adjustment market.

12. The supply/demand adjustment control device according to claim 1 or 2, wherein when power is supplied to another country, the acquisition unit acquires, as the first power, power obtained by adding fourth power, defined as the power supplied to the other country, to power requested to be supplied by the power plant.

13. The supply/demand adjustment control device according to claim 1 or 2, wherein when power is supplied to another country, the acquisition unit acquires, as the second power, power obtained by adding fourth power, defined as the power supplied to the other country, to power requested from the power supply and demand adjustment market.

14. A supply/demand adjustment method, comprising the steps of:
acquiring first power requested for a power plant including a plurality of generators and second power requested from a power supply and demand adjustment market;
distributing a total load that is a sum of the first power and the second power to the plurality of generators in descending order of operation efficiency, to distribute a load close to a rated load as much as possible to the generators; and
determining whether to make a bid for a request from the power supply and demand adjustment market, based on whether the total load is able to be supplied.

15. An integrated supply/demand adjustment method, comprising the steps of:
acquiring first power requested for a plurality of power plants and second power requested from a power supply and demand adjustment market;
distributing a total load that is a sum of the first power and the second power to a plurality of generators of the plurality of power plants in descending order of operation efficiency, to distribute a load close to a rated load as much as possible to the generators; and
determining whether to make a bid for a request from the power supply and demand adjustment market, based on whether the total load is able to be supplied.

16. A program causing a computer to execute the steps of:
acquiring first power requested for a power plant including a plurality of generators and second power requested from a power supply and demand adjustment market;
distributing a total load that is a sum of the first power and the second power to the plurality of generators in descending order of operation efficiency, to distribute a load close to a rated load as much as possible to the generators; and
determining whether to make a bid for a request from the power supply and demand adjustment market, based on whether the total load is able to be supplied.

17. A program causing a computer to execute the steps of:
acquiring first power requested for a plurality of power plants and second power requested from a power supply and demand adjustment market;
distributing a total load that is a sum of the first power and the second power to a plurality of generators of the plurality of power plants in descending order of operation efficiency, to distribute a load close to a rated load as much as possible to the generators; and
determining whether to make a bid for a request from the power supply and demand adjustment market, based on whether the total load is able to be supplied.
